# EUROPÄISCHE PATENTANMELDUNG

(11) **EP 1 531 397 A1**
(43) Veröffentlichungstag der Anmeldung: **18.05.2005**
(21) Anmeldenummer: 03026120.0
(22) Anmeldetag: 13.11.2003
(51) Int. Cl.: G06F 12/02

(54) **Vorrichtung zur Verwaltung eines virtuellen Heap-Speichers sowie zugehörige Verfahren**

(71) Anmelder: SIEMENS AKTIENGESELLSCHAFT, 80333 München (DE)
(72) Erfinder: Lagally, Michael, 81243 München (DE); Pätzold, Jens, 81827 München (DE); Schlichte, Marc, 81379 München (DE)

(57) **Zusammenfassung**

Die Erfindung betrifft eine Vorrichtung zur Verwaltung eines virtuellen Heap-Speichers sowie zugehörige Verfahren, wobei eine lokale Datenverarbeitungseinheit (LDV) ein laufzeittypisiertes Anwendungsprogramm (OA) abarbeitet, und die abzuarbeitenden Objekte in einem lokalen Heap-Speicherbereich (LHM) gespeichert werden. Eine lokale Heap-Speicher-Verwaltungseinheit (LHMM) dient hierbei dem Aus-/Einlagern von benutzten Objekten aus/in den lokalen Heap-Speicherbereich (LHM) und zum Aktualisieren einer Zuordnung zwischen dem ausgelagerten Objekt und den nicht ausgelagerten Objekten. Eine lokale Sende-/Empfangseinheit (LTR) zur Realisierung einer Teleommunikationsschnittstelle (KS) dient hierbei dem Senden/Empfangen der aus-/einzulagernden Objekte an/von einem externen Heap-Speicherbereich (RHM) in Abhängigkeit von der lokalen Heap-Speicher-Verwaltungseinheit (LHMM). Auf diese Weise erhält man eine Heap-Speichervergrößerung durch einen virtuellen Heap-Speicher (VHM) unter Ausnutzung eines Kommunikationsnetzwerks.

## Beschreibung

Die vorliegende Erfindung bezieht sich auf eine Vorrichtung zur Verwaltung eines virtuellen Heap-Speichers sowie zugehörige Verfahren und insbesondere auf eine Vorrichtung zum Aus-/Einlagern von benutzten Objekten aus/in einen lokalen Heap-Speicher unter Verwendung einer Kommunikationsschnittstelle und eines externen Heap-Speicherservers.

Typbasierte Systeme die beispielsweise bei objektorientierter Programmierung bzw. objektbezogenen Programmiersprachen Anwendung finden, werden zunehmend wichtiger, da insbesondere neue und einfachere Lösungsansätze für zukünftige oder bestehende Probleme realisiert werden können.

Während in herkömmlichen Datenverarbeitungssystemen ein von einer Datenverarbeitungseinheit wie z.B. einem Prozessor abzuarbeitendes Programm üblicherweise sequentiell in einem Arbeitsspeicher gespeichert ist und lediglich variable Parameter in vorbestimmten Speicherbereichen verändert werden, realisieren laufzeit-typisierte Datenverarbeitungssysteme ihre Speicherverwaltung grundsätzlich anders, wobei in einem sogenannten Heap-Speicher bzw. Haldenspeicher üblicherweise Daten in typisierten Blöcken bzw. Objekten abgelegt werden, und somit neuartige Lösungsansätze ermöglichen. Bekannte laufzeit-typisierte Programmiersprachen sind beispielsweise C#, Lisp oder JAVA®.

In einem derartigen laufzeit-typisierten Datenverarbeitungssystem bezeichnet ein Block einen Speicherbereich, der im Heap-Speicher zugewiesen wird. Ein typisiertes Objekt befindet sich in einem Block und enthält üblicherweise eine Typ-Identifikation bzw. ein Type-Tag zur Festlegung eines vorbestimmten Objekttyps sowie Datenzellen zum Speichern von eigentlichen Nutzdaten und insbesondere Zeiger bzw. Referenzen, die beispielsweise auf andere typisierte Objekte verweisen und eine Referenzierung ermöglichen. Ein Zeiger ist demzufolge ein Wert, der als eine Adresse bzw. Referenz zu einem Block, das heißt zu einem anderen Objekt verwendet wird.

Anhand der Zeiger bzw. einer vorhandenen Referenzierung kann in laufzeit-typisierten Datenverarbeitungssystemen üblicherweise festgestellt werden, welche Knoten bzw. welche Objekte aktiv sind bzw. noch benutzt werden und welche Blöcke bzw. Objekte deaktiviert wurden und somit unbenutzt für eine Freigabe von Speicherplatz im Heap-Speicher zur Verfügung stehen.

In herkömmlichen laufzeit-typisierten Datenverarbeitungssystemen dient der Heap-Speicher bzw. Haldenspeicher als Arbeitsspeicher für ein derartiges objektbezogenes Applikationsprogramm. Der Heap-Speicher steht hierbei über einen Adress-/Datenbus sowie eine Steuerleitung mit einer eigentlichen Datenverarbeitungseinheit bzw. einer CPU (Central Processing Unit) in Verbindung.

Bei der Durchführung bzw. Abarbeitung des objektbezogenen Anwendungsprogramms werden innerhalb des Heap-Speichers eine Vielzahl von Blöcken mit zugehörigen Objekten erzeugt und wieder gelöscht bzw. deaktiviert, wobei ein Löschen im Wesentlichen das Entfernen einer Referenz bzw. eines Zeigers darstellt und die Objekte nicht mehr in Verbindung mit der restlichen Objektstruktur stehen. Die gelöschten bzw. nicht referenzierten Objekte bzw. Daten in den typisierten Objekten sind jedoch weiterhin in den Blöcken bzw. jeweiligen Speicherbereichen vorhanden und verbrauchen somit zunehmend Speicherplatz im Heap-Speicher.

Zur Speicherbereinigung besitzen daher derartige objektbezogene Applikationen bzw. laufzeit-typisierte Datenverarbeitungssysteme sogenannte Freispeicherverwaltungsprogramme bzw. "Garbage Collector", die eine automatische Speicherbereinigung des Heap-Speichers durchführen, entweder wenn kein weiterer freier Speicherplatz zum Abspeichern von zusätzlichen Blöcken bzw. Objekten im Heap-Speicher zur Verfügung steht bzw. der Heap-Speicher scheinbar voll ist, oder beispielsweise zu bestimmten Zeitpunkten.

Bei einer derartigen Speicherbereinigung werden üblicherweise unbenutzte bzw. nicht aktive Objekte erkannt, anschließend freigegeben bzw. als freigegeben markiert und abschließend eine Neuordnung bzw. Reorganisation der verbleibenden benutzten Objekte durchgeführt, wodurch freier Speicherplatz im Heap-Speicher geschaffen werden kann.

Gleichwohl sind auch derartigen Freispeicherverwaltungsprogrammen Grenzen gesetzt, sobald trotz Anwendung derartiger Techniken kein weiterer freier Speicherplatz mehr geschaffen werden kann. Insbesondere in mobilen Endgeräten wie z.B. mobilen Telefonen (Handys) sind jedoch die Ressourcen (wie z.B. Speicherplatz) stark begrenzt, weshalb durchaus der Fall auftreten kann, dass ein objektbezogenes Anwendungsprogramm keinen ausreichenden Arbeitsspeicher bzw. Heap-Speicherplatz zur Verfügung gestellt bekommt und somit abgebrochen werden muss.

Der Erfindung liegt daher die Aufgabe zu Grunde, eine Vorrichtung zur Verwaltung eines virtuellen Heap-Speichers sowie zugehörige Verfahren zu schaffen, wodurch ein unbeabsichtigter Programmabbruch zuverlässig verhindert werden kann.

Erfindungsgemäß wird diese Aufgabe hinsichtlich der Vorrichtung durch die Merkmale des Patentanspruchs 1 und hinsichtlich der Verfahren durch die Maßnahmen der Patentansprüche 14 und 22 gelöst.

Insbesondere durch Verwendung einer lokalen Heap-Speichereinheit zum Speichern von Daten in typisierten Objekten, einer lokalen Datenverarbeitungseinheit zum Abarbeiten eines laufzeit-typisierten Anwendungsprogramms, wobei die abzuarbeitenden Objekte in der lokalen Heap-Speichereinheit gespeichert werden, einer lokalen Heap-Speicher-Verwaltungseinheit zum Aus-/Einlagern von zumindest einem Teilbereich von benutzten Objekten aus/in die lokale Heap-Speichereinheit und zum Aktualisieren einer Zuordnung zwischen den zumindest teilweise aus-/eingelagerten Objekten und den nicht ausgelagerten benutzten Objekten sowie einer lokalen Sende-/Empfangseinheit zum Senden/Empfangen der zumindest teilweise aus-/einzulagernden Objekte an/von einem externen Heap-Speicher über eine Kommunikationsschnittstelle in Abhängigkeit von der Heap-Speicher-Verwaltungseinheit, kann auch bei mangelnder Speicherkapazität des lokalen Heap-Speichers unter Verwendung eines externen Heap-Speichers und einer Kommunikationsschnittstelle ein unerwünschter Programmabbruch aufgrund mangelnden Speicherplatzes zuverlässig verhindert werden.

Insbesondere in mobilen Telekommunikationsendgeräten kann somit eine bereits vorhandene lokale Sende-/Empfangseinheit zum Aus-/Einlagern von benutzten Objekten an eine Heap-Servereinheit verwendet werden, die sich irgendwo in einem Telekommunikations-Netzwerk befindet. Da zukünftige Telekommunikationsendgeräte außerordentlich hohe Bandbreiten aufweisen, besteht demzufolge eine effektive Möglichkeit, auf einen in einem Netzwerk vorhandenen externen Heap-Speicher zuzugreifen, um den eigenen lokalen Heap-Speicher zumindest kurzzeitig zu entlasten, wodurch sich ein vergrößerter virtueller Heap-Speicher ergibt.

Der im Netzwerk vorhandene externe Heap-Speicher weist beispielsweise eine externe Heap-Speichereinheit zum Speichern der zumindest teilweise auszulagernden Objekte, eine externe Sende-/Empfangseinheit zum Empfangen/Senden der zumindest teilweise aus-/einzulagernden Objekte und eine externe Heap-Speicher-Verwaltungseinheit zum Ansteuern der externen Speichereinheit und der externen Sende-/Empfangseinheit in Abhängigkeit von der lokalen Heap-Speicher-Verwaltungseinheit auf.

Vorzugsweise ist die lokale und/oder externe Heap-Speicher-Verwaltungseinheit in einer Freispeicherverwaltungseinheit zur Durchführung einer Speicherbereinigung in der lokalen und/oder externen Heap-Speichereinheit realisiert. Da derartige Freispeicherverwaltungseinheiten bzw. Speicherbereinigungsprogramme bereits wesentliche Funktionalitäten zur Reorganisation von benutzten und unbenutzten Objekten aufweisen, kann der virtuelle Heap-Speicher mit minimalem Aufwand und somit kostengünstig realisiert werden.

Vorzugsweise wird das Auslagern von benutzten Objekten in den externen Heap-Speicher in Abhängigkeit von einer Anzahl von Referenzen bzw. Zeigern in den benutzten Objekten durchgeführt, wobei insbesondere Objekte mit einer minimalen Anzahl oder keiner Referenz ausgelagert werden. Der Aufwand zum Aktualisieren der übrigen Referenzen der benutzten Objekte im Objektgeflecht kann somit minimal gehalten werden.

Ferner kann das Auslagern in Abhängigkeit von einer Objektzugriffshäufigkeit der benutzten Objekte durchgeführt werden, wobei insbesondere Objekte mit einem sehr seltenen Objektzugriff in den externen Heap-Speicher ausgelagert werden.

Ferner kann das Auslagern auch in Abhängigkeit von einer Größe der benutzten Objekte und/oder in Abhängigkeit von einer verstrichenen Zeitdauer seit einem letzten Objektzugriff auf das benutzte Objekt durchgeführt werden, wodurch der Verwaltungsaufwand und insbesondere auch die Übertragungskosten für das Aus-/Einlagern minimiert werden können.

Obwohl vorzugsweise die Objekte in ihrer Gesamtheit aus- bzw. eingelagert werden, können auch nur Teilbereiche und insbesondere ein Daten-Teilbereich eines aus-/einzulagernden Objekts von den Sende-/Empfangseinheiten übertragen werden. Die Übertragungsraten und somit Kosten lassen sich dadurch weiter verringern.

Zum -Erzeugen einer Zuordnung zwischen einem aus-/eingelagerten Objekt und den nicht ausgelagerten Objekten wird beispielsweise durch Modifikation des Typ-Identifikators, durch Modifikation eines Referenzzählers oder durch Kopieren des aus-/einzulagernden Objekts und einer entsprechenden Aktualisierung der Referenzen der nicht ausgelagerten Objekte realisiert.

Hinsichtlich des Verfahrens zum Auslagern von zumindest einem Teilbereich eines benutzten Objekts aus einem lokalen Heap-Speicher wird zunächst eine Speicherallokation im lokalen Heap-Speicherbereich durchgeführt, um anschließend zu überprüfen, ob ausreichender Speicherplatz zur Verfügung steht. Wenn ausreichend Speicherplatz im lokalen Heap-Speicherbereich vorhanden ist, so werden Daten in typisierten Objekten (bzw. Objekte) im lokalen Heap-Speicherbereich abgespeichert. Wenn jedoch nicht ausreichend Speicherplatz im lokalen Heap-Speicherbereich vorhanden ist, so wird zumindest ein auszulagerndes Objekt des Objektgeflechtes festgelegt bzw. ausgewählt und eine Auslagerung von zumindest einem Teilbereich des bestimmten bzw. festgelegten Objekts in einen externen Heap-Speicherbereich über eine Kommunikationsschnittstelle durchgeführt. Abschließend erfolgt eine Zuordnung zwischen dem zumindest teilweise ausgelagerten Objekt im externen Heap-Speicherbereich und den im lokalen Heap-Speicherbereich verbleibenden bzw. nicht ausgelagerten benutzten Objekten.

Vorzugsweise wird vor dem Anstoßen des Auslagerungsvorganges eine Freispeicherbereinigung im lokalen Heap-Speicherbereich durchgeführt, um die Auslagerung über die Kommunikationsschnittstelle nur in einer begrenzten Anzahl von Fällen zu aktivieren.

Hinsichtlich des Verfahrens zum Einlagern von zumindest einem Teilbereich eines benutzten Objekts in einen lokalen Heap-Speicher wird zunächst überprüft, ob lokal ein Objektzugriff für ein vorbestimmtes Objekt vorliegt, wobei zumindest ein Teilbereich des vorbestimmten Objekts in einem externen Heap-Speicherbereich ausgelagert ist. Sofern dies der Fall ist, wird ein Typ-Identifikator des zumindest teilweise ausgelagerten Objekts ermittelt und im lokalen Heap-Speicherbereich auf der Grundlage dieses Typ-Identifikators ein Speicherbereich zugeteilt. Anschließend wird wiederum eine Einlagerung des zumindest teilweise ausgelagerten Objekts in den zugeteilten Speicherbereich des lokalen Heap-Speicherbereichs über die Kommunikationsschnittstelle durchgeführt und anschließend eine Zuordnung zwischen dem eingelagerten Objekt und den weiteren benutzten Objekten im lokalen Heap-Speicherbereich erstellt bzw. aktualisiert. Abschließend kann der Objektzugriff auf das zumindest teilweise eingelagerte Objekt im lokalen Heap-Speicherbereich durchgeführt werden.

In den weiteren Unteransprüchen sind weitere vorteilhafte Ausgestaltungen der Erfindung gekennzeichnet.

Die Erfindung wird nachfolgend anhand von bevorzugten Ausführungsbeispielen näher beschrieben.

Es zeigen:
Figur 1 eine vereinfachte Blockdarstellung einer Vorrichtung zur Verwaltung eines virtuellen Heap-Speichers;
Figuren 2A bis 2C eine vereinfachte graphische Darstellung eines virtuellen Heap-Speicherbereichs zur Veranschaulichung einer Auslagerung von einem lokalen zu einem externen Heap-Speicher;
Figur 3 ein vereinfachtes Flussdiagramm zur Veranschaulichung eines Verfahrens zum Auslagern von Objekten aus einem lokalen Heap-Speicher; und
Figur 4 ein vereinfachtes Flussdiagramm zur Veranschaulichung eines Verfahrens zum Einlagern von Objekten in einen lokalen Heap-Speicher.

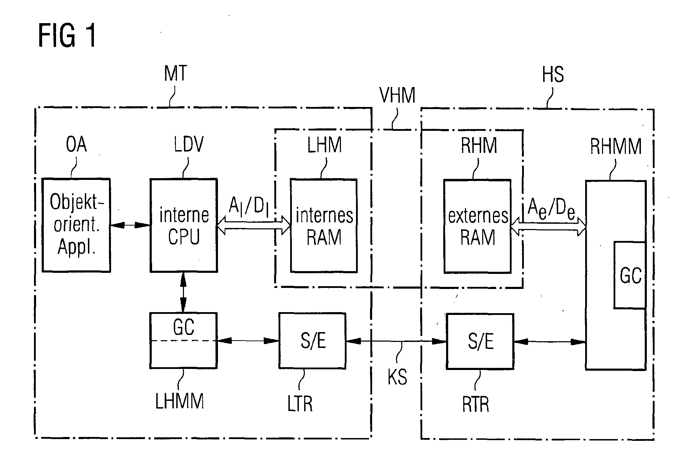

Figur 1 zeigt eine vereinfachte Blockdarstellung zur Veranschaulichung einer Vorrichtung zur Verwaltung eines virtuellen Heap-Speichers VHM (Virtual Heap Memory).

Gemäß Figur 1 besteht der virtuelle Heap-Speicher VHM aus einem lokalen Heap-Speicher bzw. einer lokalen Heap-Speichereinheit LHM (Local Heap Memory), die in einem mobilen Endgerät und insbesondere in einem mobilen Telekommunikationsendgerät MT vorliegt, sowie aus einem externen Heap-Speicher bzw. einer externen Heap-Speichereinheit RHM (Remote Heap Memory), der sich beispielsweise in einer Heap-Servereinheit HS vorzugsweise innerhalb eines Telekommunikationsnetzwerks befindet.

Zur Realisierung der lokalen sowie externen Heap-Speichereinheit LHM und RHM werden beispielsweise Speicher mit wahlfreiem Schreib-Lese-Zugriff (RAM, Random Access Memory) verwendet.

Im mobilen Telekommunikationsendgerät MT ist die lokale Heap-Speichereinheit LHM über einen lokalen Adress-/Datenbus Aₗ/Dₗ mit einer lokalen Datenverarbeitungseinheit LDV verbunden, die beispielsweise einen Mikroprozessor bzw. eine CPU (Central Processing Unit) aufweist.

Ferner weist das mobile Telekommunikationsendgerät MT zumindest ein objektbezogenes Anwendungsprogramm bzw. eine laufzeit-typisiert Applikation OA auf, welche unter Verwendung des lokalen Heap-Speichers LHM und der lokalen Datenverarbeitungseinheit LDV abgearbeitet bzw. ausgeführt wird. Wie bereits vorstehend beschrieben wurde, werden bei der Durchführung bzw. Abarbeitung des objektbezogenen Anwendungsprogramms OA innerhalb des lokalen Heap-Speichers LHM eine Vielzahl von Blöcken mit zugehörigen Objekten erzeugt und wieder gelöscht, wobei ein Löschen im Wesentlichen das Entfernen einer Referenz bzw. eines Zeigers darstellt und die Objekte weiterhin in den Blöcken bzw. den jeweiligen Speicherbereichen vorhanden sind und somit zunehmend Speicherplatz verbrauchen.

Da insbesondere mobile Telekommunikationsendgeräte relativ begrenzte Ressourcen wie beispielsweise einen lokalen Heap-Speicher besitzen, andererseits jedoch über ihre Telekommunikationsschnittstelle KS in einem Telekommunikationsnetzwerk auf eine Vielzahl von Diensten und insbesondere objektbezogene Zusatzprogramme zugreifen können (z.B. Videostreaming usw.), kann trotz einer üblicherweise durchgeführten Freispeicherverwaltung der Fall auftreten, dass zur Durchführung eines objektbezogenen Programms keine weiteren Objekte mehr in einem lokalen Heap-Speicher gespeichert werden können und somit das Programm bzw. die Anwendung abgebrochen werden muss.

Dies ist beispielsweise der Fall, wenn ein Benutzer ein sogenanntes Java-MIDlet (z.B. Spiel) über die Funkschnittstelle (UMTS, GPRS, WLAN, ...) aus dem Netzwerk herunterlädt und auf seinem Handy installiert, welches z.B. eine J2ME-Laufzeitumgebung (Java 2 Microedition) aufweist.

Gemäß der vorliegenden Erfindung weist das mobile Telekommunikationsendgerät MT zur Vermeidung dieses unerwünschten Abbruchs eine lokale Heap-Speicher-Verwaltungseinheit LHMM (Local Heap Memory Management) auf, die ein Aus-/Einlagern von zumindest einem Teilbereich der benutzten Objekte aus/in die lokale Heap-Speichereinheit LHM realisiert und darüber hinaus eine Zuordnung zwischen den aus-/eingelagerten Objekten und den nicht aus-/eingelagerten Objekten im lokalen Heap-Speicher aktualisiert. Genauer gesagt werden nach vorbestimmten Kriterien aktive bzw. benutzte Objekte über die im mobilen Telekommunikationsendgerät MT ohnehin vorhandene lokale Sende-/Empfangseinheit sowie eine zugehörige Übertragungs- bzw.

Telekommunikationsschnittstelle KS nach extern verlagert, wodurch im lokalen Heap-Speicher LHM Speicherplatz für weitere Objekte geschaffen werden kann. In umgekehrter Richtung werden bei einem beabsichtigten Zugriff auf nach extern ausgelagerte Objekte diese über die lokale Sende-/Empfangseinheit LTR von der lokalen Heap-Speicher-Verwaltungseinheit LHMM angefordert und wieder in die lokale Heap-Speichereinheit eingelagert, wodurch ein Abarbeiten des objektbezogenen Anwendungsprogramms im mobilen Telekommunikationsendgerät ermöglicht wird.

Zum Auslagern von Objekten über die lokale Sende-/Empfangseinheit LTR (Local Transmitter Receiver) ins Kommunikationsnetzwerk befindet sich dort beispielsweise ein externer Heap-Speicher bzw. eine externe Heap-Servereinheit HS, die ihrerseits über eine externe Sende-/Empfangseinheit RTR (Remote Transmitter Receiver) zum Empfangen/Senden der aus- bzw. einzulagernden Objekte über die Kommunikationsschnittstelle KS bzw. ein dazwischen geschaltetes Netzwerk wie beispielsweise das Internet ermöglicht.

Eine externe Heap-Speicher-Verwaltungseinheit RHMM (Remote Heap Memory Management) steuert hierbei eine externe Heap-Speichereinheit RHM und die externe Sende-/Empfangseinheit RTR in Abhängigkeit von der lokalen Heap-Speicher-Verwaltungseinheit LHMM derart, dass auf eine Aufforderung hin ausgewählte Objekte aus der lokalen Heap-Speichereinheit LHM in die externe Heap-Speichereinheit RHM ausgelagert werden und später wieder zurückgelagert bzw. eingelagert werden können.

Im einfachsten Fall weist die externe Heap-Speicher-Verwaltüngseinheit RHMM ebenfalls einen handelsüblichen Mikroprozessor auf, der über einen externen Adress-/Datenbus Aₑ/Dₑ sowie zugehörige nicht dargestellte Steuerleitungen mit der externen Heap-Speichereinheit RHM in Verbindung steht.

Zur Optimierung einer virtuellen Speicherkapazität kann sowohl die lokale als auch die externe Heap-Speicher-Verwaltungseinheit LHMM und RHMM eine Speicherbereinigungseinheit bzw. einen sogenannten "Garbage Collector" GC zum Durchführen einer Speicherbereinigung in der lokalen und/oder externen Heap-Speichereinheit LHM und RHM aufweisen. Bei einer derartigen Speicherbereinigung werden zunächst unbenutzte bzw. nicht aktive oder nicht referenzierte typisierte Objekte erkannt und anschließend freigegeben bzw. als freigegeben markiert, um abschließend eine Neuordnung bzw. Reorganisation der verbleibenden benutzten bzw. aktiven typisierten Objekte durchzuführen.

Üblicherweise wird hierbei auf vorbekannte Speicherbereinigungsprozeduren bzw. -algorithmen zurückgegriffen.

Im Wesentlichen sei hierbei auf den sogenannten Referenzzähler-Algorithmus verwiesen, bei dem für jedes Objekt ein Referenzzähler gepflegt und beim Erstellen des Objekts auf 1 gesetzt wird. Wird ein neues Objekt mit einer Referenz auf dieses Objekt erstellt, so wird der Zähler um 1 erhöht, während beim Löschen einer Referenz auf dieses Objekt der Zähler um 1 erniedrigt wird. Objekte, deren Referenzzähler demzufolge den Wert 0 aufweisen, können somit gelöscht bzw. als "freigegeben" markiert werden. Ein wesentlicher Vorteil dieses Speicherbereinigungsverfahrens ist, dass in relativ kleinen Zeitstücken eine Speicherbereinigung durchgeführt werden kann, wobei jedoch nachteilig ist, dass der Algorithmus keine sogenannten "Zyklen" erkennt, weshalb nicht immer alle nicht benutzten Objekte gelöscht bzw. freigegeben werden können. Ferner ist der Aufwand zur Verwaltung des Referenzzählers nicht unwesentlich.

Darüber hinaus können sogenannte "Mark-and-Sweep-Algorithmen" zum Einsatz kommen, wobei ausgehend von den Wurzeln (Roots) eines Objektgeflechts Referenzen systematisch durchgegangen werden und alle Objekte, die darüber erreicht werden können, markiert werden. Die Objekte, die nach dem Durchlauf nicht markiert sind, können gelöscht bzw. freigegeben werden, da sie auch vom Programm nicht mehr anzusprechen sind.

Ferner können zur Speicherbereinigung sogenannte Kompakt-Algorithmen (Compacting Collectors) eingesetzt werden, wobei die Objekte zum einen Ende des Heap-Speichers verschoben werden. Hierbei bildet sich ein zusammenhängender freier Speicherbereich am anderen Ende des Heap-Speichers, wobei jedoch alle Referenzen auf die bewegten Objekte anschließend erneuert bzw. neu referenziert werden müssen. Das Erneuern, der Referenzen kann dadurch vereinfacht werden, dass die einzelnen Referenzen nicht direkt auf das Objekt verweisen, sondern auf einen sogenannten "Objekt-Handle" in einer Objekttabelle, über den das Objekt referenziert wird. Dadurch müssen nicht mehr die einzelnen Referenzen auf ein Objekt verändert werden, sondern nur die Adresse, auf die das Handle verweist.

Abschließend sei noch auf den sogenannten Kopier-Algorithmus (Copy Collector) hingewiesen, der einen Heap-Speicher in zwei Teilbereiche aufteilt, wobei nur einer dieser Teilbereiche auf einmal benutzt wird. In diesem Teilbereich werden die Objekte ganz normal erzeugt. Wenn der Speicherplatz in diesem Heap-Teilbereich nicht mehr ausreicht, wird die Ausführung des laufzeit-typisierten Anwendungsprogramms unterbrochen, wobei die Speicherbereinigungseinheit alle noch lebenden, d.h. noch benutzten Objekte in den zweiten Teil kopiert und dieser Teilbereich des Heap-Speichers zum aktiven Teilbereich wird. Der ursprünglich benutzte Teilbereich des Heap-Speichers wird dann als frei markiert, wodurch alle toten bzw. nicht benutzten Objekte dadurch verloren gehen. Vorteilhaft ist hierbei, dass es keine zwei Phasen wie bei der Markand-Sweep-Methode gibt und die Objekte sozusagen "on the fly" während des Durchschreitens des Referenzgraphen bzw. des Objektgeflechts kopiert werden. Nachteilig ist jedoch der erhöhte Speicherplatzbedarf, da der Heap-Speicher doppelt so groß sein muss wie eigentlich notwendig.

Im Wesentlichen basierend auf diesen bereits vorhandenen Speicherbereinigungs-Algorithmen erfolgt nunmehr eine Verwaltung des virtuellen Heap-Speichers VHM, der sich aus dem lokalen Heap-Speicher LHM und dem externen Heap-Speicher RHM zusammensetzt. Insbesondere wird hierbei eine lokale Sende-/Empfangseinheit derart angesteuert, dass unter Verwendung von üblichen Speicherbereinigungs-Algorithmen nunmehr eine Auslagerung von vorbestimmten Objekten in die externe Heap-Speichereinheit RHM über die Kommunikationsschnittstelle KS erfolgt.

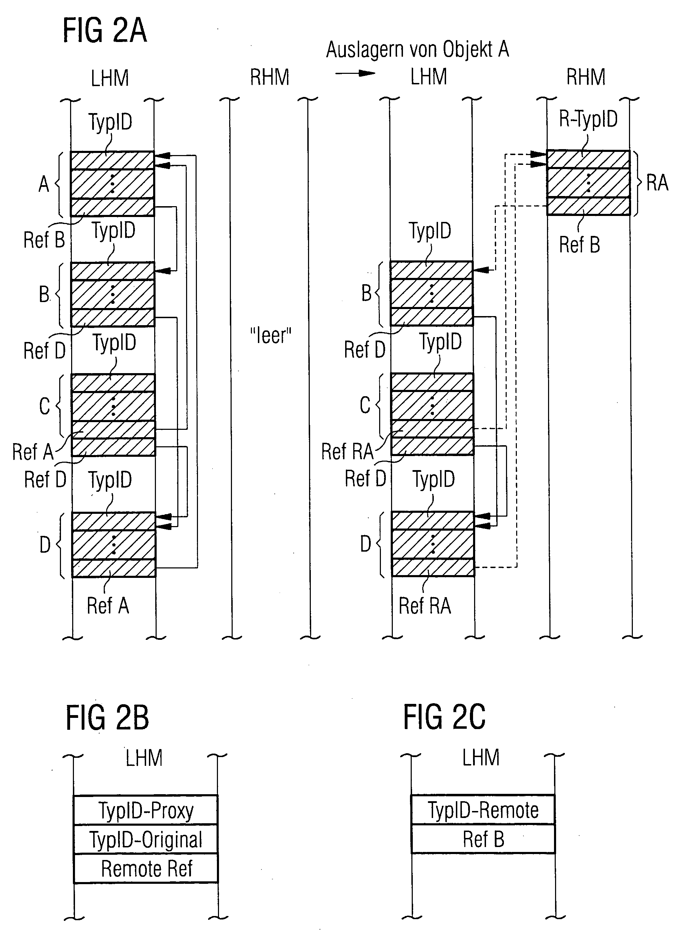

Figur 2A zeigt eine vereinfachte Darstellung zur Veranschaulichung eines Auslagerungsvorgangs von einem vorbestimmten Objekt in der lokalen Heap-Speichereinheit LHM in die externe Heap-Speichereinheit RHM gemäß einem ersten Ausführungsbeispiel.

Zunächst sei davon ausgegangen, dass die externe Heap-Speichereinheit RHM leer ist, d.h. keine ausgelagerten Objekte aufweist. Im lokalen Heap-Speicher LHM befinden sich hingegen die Objekte A, B, C und D, welche beispielsweise einen Typ-Identifikator TypID und eine Referenz bzw. einen Zeiger RefA, RefB, RefD auf ein anderes Objekt aufweisen. Ferner besitzen derartige Objekte auch nicht näher dargestellte sogenannte Nutzdaten.

Soll nunmehr das Objekt A zum Vergrößern eines Speicherplatzes im lokalen Heap-Speicher LHM ausgelagert werden, so wird diese zunächst nach einem vorbestimmtem Kriterium ausgewählt bzw. festgelegt und anschließend beispielsweise vollständig aus dem lokalen Heap-Speicher LHM ausgelagert, d.h. kopiert und entfernt und über die Sende-/Empfangseinheiten LTR und RTR an den externen Heap-Speicher RHM übertragen und dort abgelegt. Da nunmehr sowohl der Typ des Objekts als auch seine Referenzierung im objektbezogenen System nicht mehr korrekt ist, werden von der lokalen Heap-Speicher-Verwaltungseinheit LHMM die Zuordnungen zwischen dem ausgelagerten Objekt A und den nicht ausgelagerten Objekten B, C und D aktualisiert.

Gemäß Figur 2A besteht diese Aktualisierung der Zuordnung beispielsweise in einer Modifikation des Typ-Identifikators in einen Remote-Typ R-TypeID, wodurch angezeigt wird, dass es sich bei dem Objekt RA um ein ausgelagertes Objekt handelt. Ferner müssen die auf das ausgelagerte Objekt RA bezogenen Referenzen RefA ebenfalls aktualisiert werden, um im Falle eines Objektzugriffs das ausgelagerte Objekt wieder einlagern zu können. Demzufolge können die Referenzen RefA beispielsweise als Remote-Referenzen RefRA aktualisiert werden, die auf die Adresse des ausgelagerten Objekts RA vom Remote-Typ R-TypID verweisen.

Figur 2B zeigt ein alternatives Ausführungsbeispiel zur Realisierung einer Zuordnung zwischen einem ausgelagerten bzw. einzulagernden Objekt und den in einem lokalen Heap-Speicher LHM verbliebenen Objekten, wobei lediglich der lokale Heap-Speicher LHM betrachtet wird.

Gemäß Figur 2B kann demzufolge auch ein sogenanntes Proxy-Objekt im lokalen Heap-Speicher LHM verbleiben, welches einen neuen Typ-Identifikator TypID_Proxy erhält, ferner jedoch auch noch den ursprünglichen Typ-Identifikator TypID_Original aufweist und eine Referenz RemoteRef zum ausgelagerten Objekt besitzt. Obwohl auf diese Weise der Speicherplatzgewinn etwas geringer ist, kann wiederum sehr einfach eine Zuordnung zwischen dem ausgelagerten Objekt bzw. dem später einzulagernden Objekt und den verbliebenen Objekten hergestellt werden.

Ferner wird in Figur 2C lediglich ein Platzhalter für das ausgelagerte Objekt im lokalen Heap-Speicher LHM neu erzeugt, wobei dieses Platzhalter-Objekt wiederum einen neuen Typ-Identifikator TypeID_Remote erhält und seine ursprünglichen Referenzen bzw. Zeiger RefB beibehält. Da in diesem Fall die Rückreferenzen unverändert beibehalten werden können, ergibt sich eine besonders einfache Realisierung bzw. muss eine bereits existierende Freispeicherverwaltung nur minimal angepasst werden.

Ferner kann eine Zuordnung zwischen dem ausgelagerten bzw. einzulagernden Objekt RA und den im lokalen Heap-Speicher LHM verbliebenen Objekten auch durch einen Referenzzähler eines auszulagernden Objekts und eine entsprechende Aktualisierung der Referenzen der verbliebenen Objekte realisiert werden. Hinsichtlich der weiteren Einzeleinheiten wird hierbei auf die bekannten Freispeicherverwaltungs-Algorithmen verwiesen, welche nur insoweit modifiziert werden müssen, als sie eine Ansteuerung einer lokalen Sende-/Empfangseinheit zum Übertragen der Objekte über eine Kommunikationsschnittstelle an einen externen Heap-Speicherbereich ermöglichen. Im Gegensatz zur bekannten Freispeicherverwaltung wird bei der erfindungsgemäßen Auslagerung bzw. Einlagerung nur ein jeweils benutztes bzw. aktives Objekt aus-/eingelagert bzw. kopiert, übertragen und vor Ort gelöscht.

Zum Bestimmen bzw. Auswählen eines jeweils auszulagernden Objekts können verschiedene Kriterien herangezogen werden.

Vorzugsweise wird eine Anzahl von Referenzen der benutzten Objekte betrachtet und das Auslagern in Abhängigkeit von dieser Anzahl durchgeführt, wobei insbesondere eine minimale Anzahl oder das Vorliegen von keiner Referenz bzw. keinem Zeiger ein Kriterium darstellt, ein jeweiliges benutztes Objekt auszulagern, da der Aufwand für die Zuordnung dadurch minimal ist.

Darüber hinaus kann als Auslagerungskriterium auch eine Größe der benutzten Objekte in Betracht gezogen werden, wobei vorzugsweise sehr große Objekte in den externen Heap-Speicher ausgelagert werden, um pro Auslagerung einen maximalen freien Speicherplatz zu realisieren.

Ferner können als Auslagerungskriterien eine Objektzugriffshäufigkeit der benutzten Objekte verwendet werden, wobei vorzugsweise Objekte mit sehr seltenem Objektzugriff in den externen Heap-Speicher ausgelagert werden, um dadurch aus- bzw. einlagerungsbedingte Verzögerungen möglichst gering zu halten.

In gleicher Weise kann das Auslagern auch in Abhängigkeit von einer verstrichenen Zeitdauer seit einem letzten Objektzugriff auf ein benutztes Objekt durchgeführt werden, wobei insbesondere in Kombination mit einer Objektzugriffshäufigkeit eine weitere Optimierung des Systems möglich ist und die Aus- bzw. Einlagerungsvorgänge auf ein Minimum beschränkt werden können.

Obwohl, wie vorstehend beschrieben wurde, vorzugsweise vollständige Objekte aus- bzw. eingelagert werden, können in gleicher Weise auch nur Teilbereiche und insbesondere Daten-Teilbereiche von benutzten auszulagernden Objekten aus- und später wieder eingelagert werden. Die Datenübertragungsraten auf einer jeweiligen Kommunikationsschnittstelle können dadurch entlastet werden.

Nachfolgend werden die einzelnen Verfahrensschritte insbesondere für das Auslagern von Objekten in den externen Heap-Speicher und für das Einlagern von Objekten aus dem externen Heap-Speicher in den lokalen Heap-Speicher beschrieben.

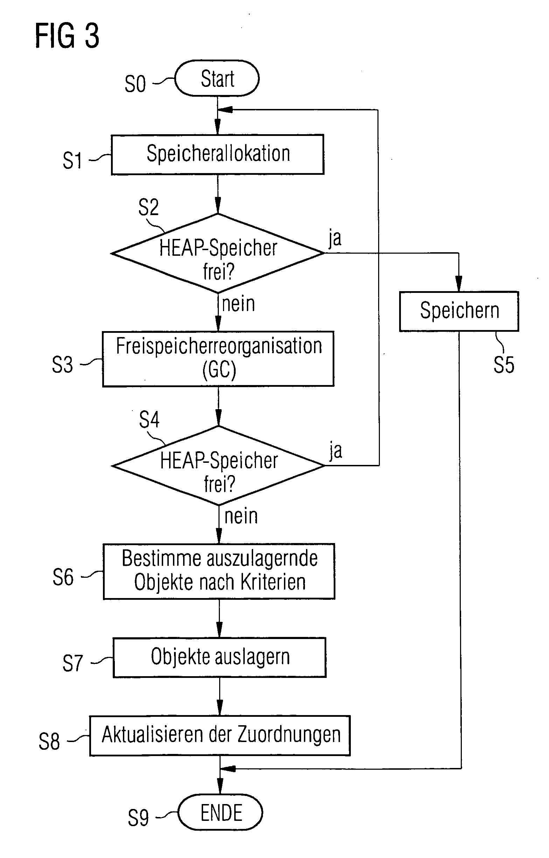

Figur 3 zeigt ein vereinfachtes Diagramm zur Veranschaulichung eines Verfahrens zum Auslagern von zumindest einem Teilbereich eines benutzten Objekts aus einem lokalen Heap-Speicher, wie er beispielsweise in einem mobilen Telekommunikationsendgerät MT gemäß Figur 1 vorliegt.

Nach einem Start in Schritt S0 wird zunächst eine Speicherallokation bzw. Speicherzuteilung in einem Schritt S1 durchgeführt, wobei für ein abzuspeicherndes Objekt eine Speicherzuteilung im lokalen Heap-Speicherbereich LHM des virtuellen Heap-Speicherbereichs VHM erfolgt. In einem Schritt S2 erfolgt eine Überprüfung dahingehend, ob ausreichend Speicherplatz im lokalen Heap-Speicherbereich LHM vorhanden ist, wobei das zu speichernde Objekt in einem Schritt S5 im lokalen Heap-Speicherbereich LHM gespeichert wird, wenn ausreichend Speicherplatz vorhanden ist.

Sollte jedoch in der Überprüfung gemäß Schritt S2 festgestellt werden, dass für das abzuspeichernde Objekt bzw. für die Daten in einem typisierten Objekt nicht ausreichend Speicherplatz im lokalen Heap-Speicherbereich LHM vorhanden ist, so wird zunächst in einem Schritt S3 eine Freispeicherreorganisation zum Durchführen einer Speicherbereinigung im lokalen Heap-Speicherbereich LHM angestoßen. Insbesondere werden hierbei die vorstehend beschriebenen Algorithmen zur Speicherbereinigung im lokalen Heap-Speicherbereich LHM durchgeführt.

In einem Schritt S4 erfolgt erneut eine Überprüfung, ob ausreichend Speicherplatz im lokalen Heap-Speicherbereich LHM für das abzuspeichernde Objekt vorliegt, wobei bei ausreichendem Speicherplatz zum Schritt S1 zurück verzweigt wird.

Sollte jedoch wiederum für das abzuspeichernde Objekt nicht ausreichend Speicherplatz im lokalen Heap-Speicherbereich LHM vorhanden sein, so wird zu einem Schritt S6 verzweigt, bei dem ein auszulagerndes Objekt nach vorbestimmten Kriterien bestimmt bzw. ausgewählt wird. Wie bereits vorstehend beschrieben wurde, können diese ganz oder zumindest teilweise auszulagernden Objekte in Abhängigkeit von einer Anzahl von Referenzen, einer Objektzugriffshäufigkeit, einer Objektgröße und/oder einer verstrichenen Zeitdauer seit einem letzten Objektzugriff ausgewählt bzw. bestimmt werden.

Nach dem Festlegen bzw. Auswählen eines auszulagerndes Objekts erfolgt in einem Schritt S7 das eigentliche Auslagern des ausgewählten bzw. bestimmten Objekts, wobei im Wesentlichen ein Kopieren aus dem lokalen Heap-Speicherbereich LHM, ein Übertragen über eine Kommunikationsschnittstelle KS und ein Löschen von zumindest einem Teilbereich des ausgewählten Objekts im lokalen Heap-Speicherbereich LHM durchgeführt wird, wodurch sich ein Speicherplatzgewinn einstellt und somit objektbezogene Anwendungsprogramme auch bei geringem lokalem Heap-Speicher ausgeführt werden können. Das Löschen kann auch durch Löschen einer Referenzierung realisiert werden, wodurch das Objekt als nicht benutzt gekennzeichnet wird und in einer zukünftigen Speicherbereinigung verworfen wird.

Abschließend erfolgt in einem Schritt S8 eine Aktualisierung der Zuordnungen bzw. ein Erstellen einer Zuordnung zwischen dem zumindest teilweise ausgelagerten Objekt und den verbleibenden bzw. weiteren benutzten Objekten im lokalen Heap-Speicherbereich LHM. Wie vorstehend beschrieben wurde, erfolgt das Erstellen der Zuordnungen wieder im Wesentlichen durch Modifikation eines Typ-Identifikators, einer Modifikation eines Referenzzählers oder dem Kopieren der aus-/einzulagernden Objekte sowie einer Aktualisierung der Referenzen der verbliebenen bzw. nicht ausgelagerten aber benutzten Objekte im lokalen Heap-Speicherbereich LHM. Das Programm endet in einem Schritt S9.

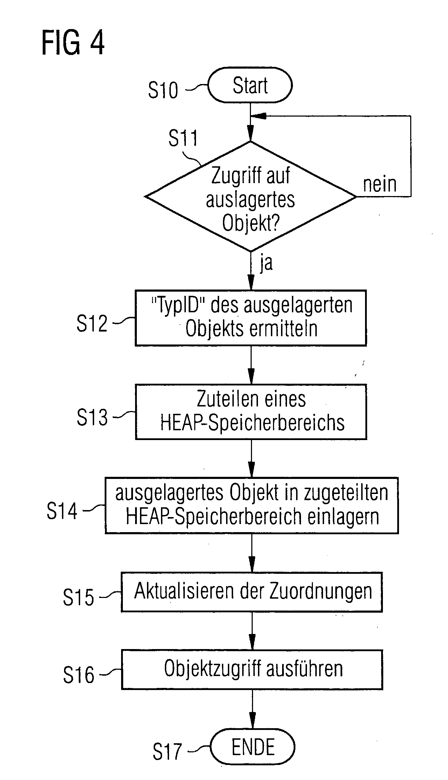

Figur 4 zeigt ein vereinfachtes Flussdiagramm zur Veranschaulichung wesentlicher Verfahrensschritte zum Einlagern von zumindest einem Teilbereich eines ausgelagerten benutzten Objekts aus einem externen Heap-Speicherbereich RHM in einen lokalen Heap-Speicherbereich LHM, wobei als externer Heap-Speicher beispielsweise eine in einem Kommunikationsnetzwerk und insbesondere im Internet vorhandene Heap-Servereinheit verwendet wird.

Nach einem Start in Schritt S10 wird in einem Schritt S11 zunächst endgeräteseitig überprüft, ob ein Objektzugriff für ein vorbestimmtes Objekt eines Objektgeflechts vorliegt, wobei zumindest ein Teilbereich des vorbestimmten Objekts in einen externen Heap-Speicherbereich RHM des virtuellen Heap-Speichers VHM ausgelagert ist. Diese Überprüfung wird üblicherweise in der lokalen Heap-Speicher-Verwaltungseinheit LHMM durchgeführt, wobei insbesondere die modifizierten Referenzen und/oder modifizierten Typ-Identifikatoren hinsichtlich eventueller Auslagerungs-Informationen überprüft werden.

Wird demzufolge in einem Objekt beispielsweise eine Referenz aufgerufen, die zu einer ausgelagerten Adresse bzw. einem ausgelagerten Objekt (Remote) verweist, so liegt beispielsweise ein derartiger Zugriff auf ein ausgelagertes Objekt vor, wodurch ein entsprechender Einlagerungsvorgang angestoßen wird. Falls kein derartiger Zugriff auf ein ausgelagertes Objekt vorliegt, wird das Objektgeflecht im lokalen Heap-Speicherbereich LHM in üblicher Weise ausgeführt bzw. abgearbeitet.

Liegt jedoch ein Zugriff auf ein ausgelagertes Objekt vor, so wird in einem Schritt S12 zunächst ein Typ-Identifikator TypID des ausgelagerten Objekts ermittelt, wobei entweder über die Kommunikationsschnittstelle der Typ-Identifikator des ausgelagerten Objekts erfragt wird, oder gemäß Figuren 2B und 2C die in dem lokalen Heap-Speicherbereich LHM verbleibenden Objektdaten hinsichtlich einer Typ-Identifikation des ausgelagerten Objektes ausgewertet werden.

Nach Ermitteln der Typ-Identifikation, die beispielsweise eine Größe eines abzuspeichernden Objekts beinhaltet, erfolgt in einem Schritt S13 eine Speicherallokation bzw. ein Zuteilen eines Speicherbereichs oder Blocks im lokalen Heap-Speicherbereich LHM, wobei die Inhalte des Typ-Identifikators berücksichtigt werden.

In einem Schritt S14 wird nunmehr das beispielsweise in der Heap-Servereinheit HS bzw. dem externen Heap-Speicherbereich RHM ausgelagerte Objekt in den zugeteilten Heap-Speicherbereich des lokalen Heap-Speicherbereichs LHM eingelagert, wobei wiederum zumindest ein Teilbereich des ausgelagerten Objekts aus dem externen Heap-Speicherbereich RHM kopiert, über die Kommunikationsschnittstelle KS übertragen und in den lokalen Heap-Speicherbereich LHM eingeschrieben wird. Üblicherweise wird nach dem Zurücklagern bzw. Einlagern das vorher im externen Heap-Speicherbereich RHM ausgelagerte Objekt gelöscht bzw. als freigegeben markiert, um wieder Speicherplatz zu schaffen für weitere auszulagernde Objekte. Die Heap-Servereinheit HS kann hierbei ebenfalls in ihrer externen Heap-Speicher-Verwaltungseinheit RHMM eine Freispeicherverwaltungseinheit GC aufweisen, mit der die ausgelagerten und nicht länger aktiven Objekte reorganisiert werden können.

Sobald das eingelagerte Objekt sich wieder im lokalen Heap-Speicherbereich LHM befindet, wird in einem Schritt S15 wiederum eine Aktualisierung der Zuordnungen zwischen dem eingelagerten Objekt und den verbliebenen Objekten in dem lokalen Heap-Speicherbereich LHM durchgeführt, wobei insbesondere die Typ-Identifikatoren sowie die Referenzen bzw. Zeiger modifiziert bzw. derart angepasst werden, dass sie wiederum auf den nur im lokalen Heap-Speicherbereich LHM vorhandenen Adressraum bezogen sind.

Abschließend kann in einem Schritt S16 der Objektzugriff auf das eingelagerte Objekt ausgeführt werden, wonach das Programm in einem Schritt S17 endet.

Die Erfindung wurde vorstehend anhand eines mobilen Telekommunikationsendgeräts wie beispielsweise eines Handys und einer Heap-Servereinheit beschrieben, die über ein Telekommunikationsnetzwerk in Verbindung stehen. Sie ist jedoch nicht darauf beschränkt und umfasst in gleicher Weise auch andere schnurlose oder schnurgebundene Endgeräte, die über eine Kommunikationsschnittstelle mit einer externen Speichereinheit in Verbindung stehen.

### Bezugszeichenliste

- MT: mobiles Telekommunikationsendgerät
- HS: Heap-Servereinheit
- VHM: virtueller Heap-Speicher
- LHM: lokaler Heap-Speicher
- RHM: externer Heap-Speicher
- LDV: lokale Datenverarbeitungseinheit
- LHMM: lokale Heap-Speicher-Verwaltungseinheit
- RHMM: externe Heap-Speicher-Verwaltungseinheit
- GC: Speicherbereinigungseinheit
- LTR: lokale Sende-/Empfangseinheit
- RTR: externe Sende-/Empfangseinheit
- Aₗ/Dₗ: lokaler Adress-/Datenbus
- Aₑ/Dₑ: externer Adress-/Datenbus
- OA: objektbezogenes Anwendungsprogramm
- A, B, C, D: lokale Objekte
- RA: ausgelagertes Objekt
- KS: Kommunikationsschnittstelle
- S0 bis S17: Verfahrensschritte

## Patentansprüche

1. Vorrichtung zur Verwaltung eines virtuellen Heap-Speichers mit
einer lokalen Heap-Speichereinheit (LHM) zum Speichern von Daten in typisierten Objekten (A, B, C, D);
einer lokalen Datenverarbeitungseinheit (LDV) zum Abarbeiten eines laufzeit-typisierten Anwendungsprogramms (OA), wobei die abgearbeiteten Objekte (A, B, C, D) in der lokalen Heap-Speichereinheit (LHM) gespeichert werden;
einer lokalen Heap-Speicher-Verwaltungseinheit (LHMM) zum Aus-/Einlagern von zumindest einem Teilbereich von benutzten Objekten aus-/in die lokale Heap-Speichereinheit (LHM) und Aktualisieren einer Zuordnung zwischen dem aus-/eingelagerten Teilbereich der benutzten Objekte und den nicht aus-/eingelagerten benutzten Objekten; und
einer lokalen Sende-/Empfangseinheit (LTR) zum Senden/Empfangen der zumindest teilweise aus-/einzulagernden Objekte an/von einem externen Heap-Speicher (HS) über eine Kommunikationsschnittstelle (KS) in Abhängigkeit von der lokalen Heap-Speicher-Verwaltungseinheit (LHMM).

2. Vorrichtung nach Patentanspruch 1,
**dadurch gekennzeichnet, dass** der externe Heap-Speicher (HS) eine externe Heap-Speichereinheit (RHM) zum Speichern der zumindest teilweise aus-/einzulagernden Objekte,
eine externe Sende-/Empfangseinheit (RTR) zum Empfangen/Senden der zumindest teilweise aus-/einzulagernden Objekte; und
eine externe Heap-Speicher-Verwaltungseinheit (RHMM) zum Ansteuern der externen Heap-Speichereinheit (RHM) und der externen Sende-/Empfangseinheit (RTR) in Abhängigkeit von der lokalen Heap-Speicher-Verwaltungseinheit (LHMM) aufweist.

3. Vorrichtung nach Patentanspruch 1 oder 2,
**dadurch gekennzeichnet, dass** die lokale und/oder externe Heap-Speicher-Verwaltungseinheit eine Speicherbereinigungseinheit (GC) zum Durchführen einer Speicherbereinigung in der lokalen und/oder externen Heap-Speichereinheit aufweist.

4. Vorrichtung nach einem der Patentansprüche 1 bis 3,
**dadurch gekennzeichnet, dass** die lokale Heap-Speicher-Verwaltungseinheit (LHMM) das Auslagern in Abhängigkeit von einer Objektzugriffshäufigkeit der benutzten Objekte durchführt.

5. Vorrichtung nach einem der Patentansprüche 1 bis 4,
**dadurch gekennzeichnet, dass** die lokale Heap-Speicher-Verwaltungseinheit (LHMM) das Auslagern in Abhängigkeit von einer Anzahl von Referenzen in den benutzten Objekten durchführt.

6. Vorrichtung nach einem der Patentansprüche 1 bis 5,
**dadurch gekennzeichnet, dass** die lokale Heap-Speicher-Verwaltungseinheit (LHMM) das Auslagern in Abhängigkeit von einer Größe der benutzten Objekte durchführt.

7. Vorrichtung nach einem der Patentansprüche 1 bis 6,
**dadurch gekennzeichnet, dass** die lokale Heap-Speicher-Verwaltungseinheit (LHMM) das Auslagern in Abhängigkeit von einer verstrichenen Zeitdauer seit einem letzten Objektzugriff der benutzten Objekte durchführt.

8. Vorrichtung nach einem der Patentansprüche 1 bis 7,
**dadurch gekennzeichnet, dass** die lokale Heap-Speicher-Verwaltungseinheit (LHMM) nur den Daten-Teilbereich der benutzten Objekte aus-/einlagert.

9. Vorrichtung nach einem der Patentansprüche 1 bis 8,
**dadurch gekennzeichnet, dass** die lokale Heap-Speicher-Verwaltungseinheit (LHMM) die Zuordnung durch Modifikation des Typ-Identifikators (TypID) eines zumindest teilweise aus-/einzulagernden Objekts aktualisiert.

10. Vorrichtung nach einem der Patentansprüche 1 bis 9,
**dadurch gekennzeichnet, dass** die lokale Heap-Speicher-Verwaltungseinheit (LHMM) die Zuordnung durch eine Modifikation eines Referenzzählers eines zumindest teilweise aus-/einzulagernden Objekts und eine Aktualisierung der Referenzen der nicht ausgelagerten Objekte aktualisiert.

11. Vorrichtung nach einem der Patentansprüche 1 bis 10,
**dadurch gekennzeichnet, dass** die lokale Heap-Speicher-Verwaltungseinheit (LHMM) die Zuordnung durch Kopieren des zumindest teilweise aus-/einzulagernden Objekts und Aktualisieren der Referenzen der nicht ausgelagerten Objekte aktualisiert.

12. Vorrichtung nach einem der Patentansprüche 1 bis 11,
**dadurch gekennzeichnet, dass** sie in einem mobilen Telekommunikationsendgerät (MT) implementiert ist.

13. Vorrichtung nach einem der Patentansprüche 1 bis 11,
**dadurch gekennzeichnet, dass** sie in einem beliebigen Kommunikationsendgerät implementiert ist.

14. Vorrichtung nach Patentanspruch 12 oder 13,
**dadurch gekennzeichnet, dass** der externe Heap-Speicher (HS) eine Heap-Servereinheit in einem Kommunikationsnetzwerk darstellt.

15. Verfahren zum Auslagern von zumindest einem Teilbereich eines benutzten Objekts aus einem lokalen Heap-Speicher mit den Schritten:
a) Durchführen einer Speicherallokation (S1) in einem lokalen Heap-Speicherbereich;
b) Durchführen einer Überprüfung für ausreichenden Speicherplatz im lokalen Heap-Speicherbereich (S4);
c) Speichern von Daten in typisierten Objekten im lokalen Heap-Speicherbereich (S5), wenn ausreichend Speicherplatz vorhanden ist;
d) Bestimmen von zumindest einem auszulagernden Objekt (S6), wenn nicht ausreichend Speicherplatz vorhanden ist;
e) Durchführen einer Auslagerung von zumindest einem Teilbereich des bestimmten Objekts in einen externen Heap-Speicherbereich (S7); und
f) Erstellen einer Zuordnung zwischen dem zumindest teilweise ausgelagerten Objekts im externen Heap-Speicherbereich und den weiteren benutzten Objekten im lokalen Heap-Speicherbereich (S8).

16. Verfahren nach Patentanspruch 15,
**dadurch gekennzeichnet, dass** vor Schritt b) eine weitere Überprüfung für einen ausreichenden Speicherplatz im lokalen Heap-Speicherbereich durchgeführt wird (S2), wobei bei nicht ausreichendem Speicherplatz eine Speicherbereinigung im lokalen Heap-Speicherbereich durchgeführt wird (S3).

17. Verfahren nach Patentanspruch 15 oder 16,
**dadurch gekennzeichnet, dass** in Schritt d) das zumindest teilweise auszulagernde Objekt in Abhängigkeit von seiner Anzahl von Referenzen bestimmt wird.

18. Verfahren nach einem der Patentansprüche 15 bis 17,
**dadurch gekennzeichnet, dass** in Schritt d) das zumindest teilweise auszulagernde Objekt in Abhängigkeit von seiner Objektzugriffshäufigkeit bestimmt wird.

19. Verfahren nach einem der Patentansprüche 15 bis 18,
**dadurch gekennzeichnet, dass** in Schritt d) das zumindest teilweise auszulagernde Objekt in Abhängigkeit von seiner Größe bestimmt wird.

20. Verfahren nach einem der Patentansprüche 15 bis 19,
**dadurch gekennzeichnet, dass** in Schritt d) das zumindest teilweise auszulagernde Objekt in Abhängigkeit von einer verstrichenen Zeitdauer seit seinem letzten Objektzugriff bestimmt wird.

21. Verfahren nach einem der Patentansprüche 15 bis 20,
**dadurch gekennzeichnet, dass** in Schritt e) ein Kopieren, Übertragen und Löschen des zumindest einen Teilbereichs des bestimmten Objekts durchgeführt wird.

22. Verfahren nach Patentanspruch 21,
**dadurch gekennzeichnet, dass** das Übertragen des zumindest teilweise auszulagernden Objekts über eine Kommunikationsschnittstelle (KS) durchgeführt wird.

23. Verfahren zum Einlagern von zumindest einem Teilbereich eines benutzten Objekts in einen lokalen Heap-Speicher mit den Schritten:
a) Durchführen einer Überprüfung, ob ein Objektzugriff für ein Objekt vorliegt, wobei zumindest ein Teilbereich des Objekts in einem externen Heap-Speicherbereich ausgelagert ist (S11);
b) Ermitteln des Typ-Identifikators des zumindest teilweise ausgelagerten Objekts (S12);
c) Zuteilen eines Speicherbereichs im lokalen Heap-Speicherbereich auf der Grundlage des Typ-Identifikators (S13);
d) Durchführen einer Einlagerung von zumindest dem ausgelagerten Teilbereichs des Objekts in den zugeteilten Speicherbereich (S14);
e) Erstellen einer Zuordnung zwischen dem zumindest teilweise eingelagerten Objekt und den weiteren benutzten Objekten im lokalen Heap-Speicherbereich (S15); und
f) Ausführen des Objektzugriffs auf das zumindest teilweise eingelagerte Objekt im lokalen Heap-Speicherbereich (S16).

24. Verfahren nach Patentanspruch 23,
**dadurch gekennzeichnet, dass** in Schritt d) ein Kopieren, Übertragen und Löschen des zumindest teilweise einzulagernden Objekts in einem externen Heap-Speicher durchgeführt wird.

25. Verfahren nach Patentanspruch 24,
**dadurch gekennzeichnet, dass** das Übertragen des zumindest teilweise einzulagernden Objekts über eine Kommunikationsschnittstelle (KS) durchgeführt wird.

26. Verfahren nach einem der Patentansprüche 15 bis 25,
**dadurch gekennzeichnet, dass** die Zuordnung durch Modifikation des Typ-Identifikators eines zumindest teilweise aus-/einzulagernden Objekts erstellt wird.

27. Verfahren nach einem der Patentansprüche 15 bis 26,
**dadurch gekennzeichnet, dass** die Zuordnung durch eine Modifikation eines Referenzzählers des zumindest teilweise aus-/einzulagernden Objekts und eine Aktualisierung der Referenzen der nicht ausgelagerten benutzten Objekte erstellt wird.

28. Verfahren nach einem der Patentansprüche 15 bis 27,
**dadurch gekennzeichnet, dass** die Zuordnung durch Kopieren des zumindest teilweise aus-/einzulagernden Objekts und Aktualisieren der Referenzen der nicht ausgelagerten benutzten Objekte erstellt wird.

## Geänderte Patentansprüche

### Geänderte Patentansprüche gemäss Regel 86(2) EPÜ.

**1.** Vorrichtung zur Verwaltung eines virtuellen Heap-Speichers mit
einer lokalen Heap-Speichereinheit (LHM) zum Speichern von Daten in typisierten Objekten (A, B, C, D);
einer lokalen Datenverarbeitungseinheit (LDV) zum Abarbeiten eines laufzeit-typisierten Anwendungsprogramms (OA), wobei die abgearbeiteten Objekte (A, B, C, D) in der lokalen Heap-Speichereinheit (LHM) gespeichert werden; und
einer lokalen Heap-Speicher-Verwaltungseinheit (LHMM) zum Einlagern von zumindest einem Teilbereich von benutzten Objekten in die lokale Heap-Speichereinheit (LHM) und Aktualisieren einer Zuordnung zwischen dem eingelagerten Teilbereich der benutzten Objekte und den nicht eingelagerten benutzten Objekten,
**gekennzeichnet durch**
eine Überprüfungseinheit zum Durchführen einer Überprüfung für ausreichenden Speicherplatz im lokalen Heap-Speicherbereich; und
eine lokale Sende-/Empfangseinheit (LTR) zum Senden/Empfangen von zumindest teilweise aus-/einzulagernden Objekten an/von einem externen Heap-Speicher (HS) über eine Kommunikationsschnittstelle (KS) in Abhängigkeit von der lokalen Heap-Speicher-Verwaltungseinheit (LHMM), wobei
die lokale Heap-Speicher-Verwaltungseinheit (LHMM) ein Auslagern von zumindest einem Teilbereich der benutzten Objekte und ein Aktualisieren einer Zuordnung zwischen dem ausgelagerten Teilbereich der benutzten Objekte und den nicht ausgelagerten benutzten Objekten bei nicht ausreichendem Speicherplatz in Abhängigkeit von einem Auslagerungskriterium der benutzten Objekte durchführt.

**2.** Vorrichtung nach Patentanspruch 1,
**dadurch gekennzeichnet, dass** der externe Heap-Speicher (HS) eine externe Heap-Speichereinheit (RHM) zum Speichern der zumindest teilweise aus-/einzulagernden Objekte,
eine externe Sende-/Empfangseinheit (RTR) zum Empfangen/Senden der zumindest teilweise aus-/einzulagernden Objekte; und eine externe Heap-Speicher-Verwaltungseinheit (RHMM) zum Ansteuern der externen Heap-Speichereinheit (RHM) und der externen Sende-/Empfangseinheit (RTR) in Abhängigkeit von der lokalen Heap-Speicher-Verwaltungseinheit (LHMM) aufweist.

**3.** Vorrichtung nach Patentanspruch 1 oder 2,
**dadurch gekennzeichnet, dass** die lokale und/oder externe Heap-Speicher-Verwaltungseinheit eine Speicherbereinigungseinheit (GC) zum Durchführen einer Speicherbereinigung in der lokalen und/oder externen Heap-Speichereinheit aufweist.

**4.** Vorrichtung nach einem der Patentansprüche 1 bis 3,
**dadurch gekennzeichnet, dass** das Auslagerungskriterium eine Objektzugriffshäufigkeit der benutzten Objekte darstellt.

**5.** Vorrichtung nach einem der Patentansprüche 1 bis 4,
**dadurch gekennzeichnet, dass** das Auslagerungskriterium eine Anzahl von Referenzen in den benutzten Objekten darstellt.

**6.** Vorrichtung nach einem der Patentansprüche 1 bis 5,
**dadurch gekennzeichnet, dass** das Auslagerungskriterium eine Größe der benutzten Objekte darstellt.

**7.** Vorrichtung nach einem der Patentansprüche 1 bis 6,
**dadurch gekennzeichnet, dass** das Auslagerungskriterium eine verstrichene Zeitdauer seit einem letzten Objektzugriff der benutzten Objekte darstellt.

**8.** Vorrichtung nach einem der Patentansprüche 1 bis 7,
**dadurch gekennzeichnet, dass** die benutzten Objekte (A, B, C, D) einen Nutzdaten-Teilbereich und zumindest eine Referenz (RefA, RefB, RefD) auf ein anderes Objekt aufweisen, wobei die lokale Heap-Speicher-Verwaltungseinheit (LHMM) nur den Nutzdaten-Teilbereich der benutzten Objekte aus-/einlagert.

**9.** Vorrichtung nach einem der Patentansprüche 1 bis 8,
**dadurch gekennzeichnet, dass** die benutzten Objekte (A, B, C, D) einen Nutzdaten-Teilbereich, zumindest eine Referenz (RefA, RefB, RefD) auf ein anderes Objekt und einen Typ-Identifikator (TypID) aufweisen, wobei die lokale Heap-Speicher-Verwaltungseinheit (LHMM) die Zuordnung durch Modifikation des Typ-Identifikators (TypID) eines zumindest teilweise aus-/einzulagernden Objekts aktualisiert.

**10.** Vorrichtung nach einem der Patentansprüche 1 bis 9,
**dadurch gekennzeichnet, dass** die benutzten Objekte (A, B, C, D) einen Nutzdaten-Teilbereich, zumindest eine Referenz (RefA, RefB, RefD) auf ein anderes Objekt, einen Typ-Identifikator (TypID) und einen Referenzzähler aufweisen, wobei die lokale Heap-Speicher-Verwaltungseinheit (LHMM) die Zuordnung durch eine Modifikation des Referenzzählers eines zumindest teilweise aus-/einzulagernden Objekts und eine Aktualisierung der Referenzen der nicht ausgelagerten Objekte aktualisiert.

**11.** Vorrichtung nach einem der Patentansprüche 1 bis 10,
**dadurch gekennzeichnet, dass** die benutzten Objekte (A, B, C, D) einen Nutzdaten-Teilbereich und zumindest eine Referenz (RefA, RefB, RefD) auf ein anderes Objekt aufweisen, wobei die lokale Heap-Speicher-Verwaltungseinheit (LHMM) die Zuordnung durch Kopieren des zumindest teilweise aus-/einzulagernden Objekts und Aktualisieren der Referenzen der nicht ausgelagerten Objekte aktualisiert.

**12.** Vorrichtung nach einem der Patentansprüche 1 bis 11,
**dadurch gekennzeichnet, dass** sie in einem mobilen Telekommunikationsendgerät (MT) implementiert ist.

**13.** Vorrichtung nach einem der Patentansprüche 1 bis 11,
**dadurch gekennzeichnet, dass** sie in einem beliebigen Kommunikationsendgerät implementiert ist.

**14.** Vorrichtung nach Patentanspruch 12 oder 13,
**dadurch gekennzeichnet, dass** der externe Heap-Speicher (HS) eine Heap-Servereinheit in einem Kommunikationsnetzwerk darstellt.

**15.** Verfahren zum Aus-/Einlagern von zumindest einem Teilbereich eines benutzten Objekts in/aus einem externen Heap-Speicherbereich aus/in einen lokalen Heap-Speicher mit den Schritten zum Auslagern:
Aa) Durchführen einer Speicherallokation (S1) in einem lokalen Heap-Speicherbereich;
Ab) Durchführen einer Überprüfung für ausreichenden Speicherplatz im lokalen Heap-Speicherbereich (S4);
Ac) Speichern von Daten in typisierten Objekten im lokalen Heap-Speicherbereich (S5), wenn ausreichend Speicherplatz vorhanden ist;
Ad) Bestimmen von zumindest einem auszulagernden Objekt (S6), wenn nicht ausreichend Speicherplatz vorhanden ist;
Ae) Durchführen einer Auslagerung von zumindest einem Teilbereich des bestimmten Objekts in einen externen Heap-Speicherbereich (S7), wenn nicht ausreichend Speicherplatz vorhanden ist; und
Af) Erstellen einer Zuordnung zwischen dem zumindest teilweise ausgelagerten Objekts im externen Heap-Speicherbereich und den weiteren benutzten Objekten im lokalen Heap-Speicherbereich (S8), wenn nicht ausreichend Speicherplatz vorhanden ist, wobei
das Auslagern in Abhängigkeit von einem Auslagerungskriterium der zumindest teilweise auszulagernden Objekte durchgeführt wird;
und den Schritten zum Einlagern:
Ea) Durchführen einer Überprüfung , ob ein Objektzugriff für ein Objekt im lokalen Heap-Speicherbereich vorliegt, wobei zumindest ein Teilbereich des Objekts im externen Heap-Speicherbereich ausgelagert ist (S11);
Eb) Ermitteln des Typ-Identifikators des zumindest teilweise ausgelagerten Objekts (S12) zur Erfassung einer Größe des zumindest teilweise einzulagernden Objekts;
Ec) Zuteilen eines Speicherbereichs im lokalen Heap-Speicherbereich auf der Grundlage des Typ-Identifikators (S13);
Ed) Durchführen einer Einlagerung von zumindest dem ausgelagerten Teilbereich des Objekts in den zugeteilten Speicherbereich (S14);
Ee) Erstellen einer Zuordnung zwischen dem zumindest teilweise eingelagerten Objekt und den weiteren benutzten Objekten im lokalen Heap-Speicherbereich (S15); und
Ef) Ausführen des Objektzugriffs auf das zumindest teilweise eingelagerte Objekt im lokalen Heap-Speicherbereich (S16).

**16.** Verfahren nach Patentanspruch 15,
**dadurch gekennzeichnet, dass** vor Schritt Ab) eine weitere Überprüfung für einen ausreichenden Speicherplatz im lokalen Heap-Speicherbereich durchgeführt wird (S2), wobei bei nicht ausreichendem Speicherplatz eine Speicherbereinigung im lokalen Heap-Speicherbereich durchgeführt wird (S3).

**17.** Verfahren nach Patentanspruch 15 oder 16,
**dadurch gekennzeichnet, dass** das Auslagerungskriterium eine Anzahl von Referenzen des zumindest teilweise auszulagernden Objekts darstellt.

**18.** Verfahren nach einem der Patentansprüche 15 bis 17,
**dadurch gekennzeichnet, dass** das Auslagerungskriterium eine Objektzugriffshäufigkeit des zumindest teilweise auszulagernden Objekts darstellt.

**19.** Verfahren nach einem der Patentansprüche 15 bis 18,
**dadurch gekennzeichnet, dass** das Auslagerungskriterium eine Größe des zumindest teilweise auszulagernde Objekts darstellt.

**20.** Verfahren nach einem der Patentansprüche 15 bis 19,
**dadurch gekennzeichnet, dass** das Auslagerungskriterium eine verstrichene Zeitdauer seit einem letzten Objektzugriff auf das zumindest teilweise auszulagernde Objekt darstellt.

**21.** Verfahren nach einem der Patentansprüche 15 bis 20,
**dadurch gekennzeichnet, dass** beim Auslagern in Schritt Ae) ein Kopieren, Übertragen und Löschen des zumindest einen Teilbereichs des bestimmten Objekts im lokalen Heap-Speicherbereich durchgeführt wird.

**22.** Verfahren nach Patentanspruch 21,
**dadurch gekennzeichnet, dass** das Übertragen des zumindest teilweise auszulagernden Objekts über eine Kommunikationsschnittstelle (KS) durchgeführt wird.

**23.** Verfahren nach einem der Patentansprüche 15 bis 22,
**dadurch gekennzeichnet, dass** beim Einlagern in Schritt Ed) ein Kopieren, Übertragen und Löschen des zumindest teilweise einzulagernden Objekts im externen Heap-Speicherbereich durchgeführt wird.

**24.** Verfahren nach Patentanspruch 23,
**dadurch gekennzeichnet, dass** das Übertragen des zumindest teilweise einzulagernden Objekts über eine Kommunikationsschnittstelle (KS) durchgeführt wird.

**25.** Verfahren nach einem der Patentansprüche 15 bis 24,
**dadurch gekennzeichnet, dass** die Zuordnung durch Modifikation des Typ-Identifikators eines zumindest teilweise aus-/einzulagernden Objekts erstellt wird.

**26.** Verfahren nach einem der Patentansprüche 15 bis 25,
**dadurch gekennzeichnet, dass** die Zuordnung durch eine Modifikation eines Referenzzählers des zumindest teilweise aus-/einzulagernden Objekts und eine Aktualisierung der Referenzen der nicht ausgelagerten benutzten Objekte erstellt wird.

**27.** Verfahren nach einem der Patentansprüche 15 bis 26,
**dadurch gekennzeichnet, dass** die Zuordnung durch Kopieren des zumindest teilweise aus-/einzulagernden Objekts und Aktualisieren der Referenzen der nicht ausgelagerten benutzten Objekte erstellt wird.
